# EUROPEAN PATENT APPLICATION

(11) **EP 1 667 032 A2**
(43) Date of publication of application: **07.06.2006**
(21) Application number: 05111259.7
(22) Date of filing: 24.11.2005
(51) Int. Cl.: G06F 17/24

(54) **System and method for performing over time statistics in an electronic spreadsheet environment**

(30) Priority: 01.12.2004 EP 04300834
(71) Applicant: International Business Machines Corporation, Armonk, N.Y. 10504 (US)
(72) Inventor: Bauchot, Frederic, 06640 Saint-Jeannet (FR); Marmigere, Gerard, 06340 Drap (FR)
(74) Representative: Etorre, Yves Nicolas

(57) **Abstract**

The present invention is directed to a system, method and computer program in a multi-dimensional spreadsheet comprising a plurality of cells identified by a cell address along each dimension, for computing statistical data based on a set of successive values taken by a given cell or by a given pair of cells over a time period. The method comprises the steps of:
- receiving a command for computing statistical data based on successive values of a first cell over a time period, said command comprising :
   - means for identifying said first cell;
   - means for determining the beginning and the end of the time period;
   - a reference to a statistical function for computing statistical data based on the successive values of said first cell over said time period;
- computing statistical data based on the successive values of said first cell over said time period, said step comprising the further steps of, each time the value of said first cell is updated :
   - computing said statistical data by means of said statistical function, based on :
      - the current value of said first cell, and
      - the previously computed statistical data based on the successive values taken by the first cell from the beginning of the time period;
   - storing the computed statistical data in place of the previously computed statistical data.

## Description

### Field of the invention

The present invention relates to the field of information processing by digital computers, and more particularly to a method and system, in an electronic spreadsheet, for computing statistical data on a set of values taken over time either by a given cell or by a pair of cells.

### Background of the invention

Before computers, numerical analyses, particularly financial ones, were usually prepared on an accountant's columnar pad or spreadsheet, with pencil and calculator in hand. By organizing data into columns and rows, spreadsheets afford the rapid assimilation of information by a reader. The task of preparing a spreadsheet on paper, however, is not quite so fast. Instead, the process tends to be very slow, as each entry must be tediously calculated and entered into the spreadsheet. Manually prepared spreadsheets are also prone to errors. Hence, preparation of spreadsheets by hand is slow, tedious, and unreliable.

With the advent of microcomputers, a solution was forthcoming in the form of "electronic spreadsheets." Better known simply as "spreadsheets," these software programs provide a computerized replacement for the traditional financial modelling tools: the accountant's columnar pad, pencil, and calculator. In some regards, spreadsheet programs are to those tools what word processors are to typewriters. Spreadsheets offer dramatic improvements in ease of creating, editing, and using financial models.

A typical spreadsheet program configures the memory of a computer to resemble the column/row or grid format of an accountant's columnar pad, thus providing a visible calculator for a user. Because this "pad" exists dynamically in the computer's memory, however, it differs from paper pads in several important ways. Locations in the electronic spreadsheet, for example, must be communicated to the computer in a format which it can understand. A common scheme for accomplishing this is to assign a number to each row in a spreadsheet, and a letter to each column. To reference a location at column A and row 1 (i.e., the upper-left-hand corner), for example, the user types in "Al". In this manner, the spreadsheet defines an addressable storage location or "cell" at each intersection of a row with a column.

Data entry into an electronic spreadsheet occurs in much the same manner that information would be entered on an accountant's pad. After a screen cursor is positioned at a desired location, the user can enter alphanumeric information. Besides holding text and numeric information, however, spreadsheet cells can store special instructions or "formulas" specifying calculations to be performed on the numbers stored in spreadsheet cells. In this fashion, cell references can serve as variables in an equation, thereby allowing precise mathematical relationships to be defined between cells. The structure and operation of a spreadsheet program, including advanced functions such as functions and macros, are documented in the technical, trade, and patent literature. For an overview, see e.g., Cobb, *S*., *Using Quattro Pro* 2, Borland-OsbomeIMcGraw-MII, 1990; and LeBlond, G. and Cobb, D., *Using* 1-2-3, Que corp., 1985. The disclosures of each of the foregoing are hereby incorporated by reference.

Electronic spreadsheets offer many advantages over their paper counterparts. For one, electronic spreadsheets are much larger (i.e., hold more information) than their paper counterparts; electronic spreadsheets having thousands or even millions of cells are not uncommon. Spreadsheet programs also allow users to perform "what-if" scenarios. After a set of computational relationships has been entered into a worksheet, thanks to imbedded formulas for instance, the spread of information can be recalculated using different sets of assumptions, with the results of each recalculation appearing almost instantaneously. Performing this operation manually, with paper and pencil, would require the recalculation of every relationship in the model with each change made. Electronic spreadsheet systems are well suited to solve "what-if" problems, that is, changing an input and seeing what happens to an output.

Electronic spreadsheet have become a tool of choice for computing statistics from a set of data. For a set of data arranged for instance in a column, conventional electronic spreadsheet tools include means, in the form of statistical functions, to compute the average of the data set, or the maximum value of the data set, or the minimum value of the data set, or the standard deviation of the data set. For a couple of data ranges arranged for instance as a pair of columns, conventional electronic spreadsheet tools include means, in the form of statistical functions, to compute the covariance of the two data sets, or the correlation of the two data sets. When electronic spreadsheets are used to perform simulations of a model (business model, or industrial model, or nature life model), these statistical functions are very useful for deriving statistical information relative to the different simulation instances of the modelled process. Typically such simulations are performed by feeding a model with inputs which can either be randomly generated, or imported from external sources. Unfortunately these statistical functions operate on the base of a set of data, recorded within data ranges, so that each simulation must be first properly recorded onto a simulation result array, to eventually build a complete array of results upon which the statistical functions can operate. When the number of simulations increases (this is required to increase the confidence in the statistical results), the volume of information that may result may be prohibitive (and even reach the built-in limitations of the commercially available electronic spreadsheet tools). As the desired information relies to the statistical data, and not to each individual simulation output, the conventional statistical means available in electronic spreadsheet environment, are not suited for computing simulation statistics. The present invention solves this problem by recursively evaluating the desired statistical information, only on the base of the last simulation, thus avoiding to keep a high volume array of all simulations results.

### Summary of the invention

The present invention is directed to a system, method and computer program as defined in independent claims.

Further embodiments of the invention are provided in the appended dependent claims.

The object of the present invention is to compute statistical information based on the set of values taken by a given cell or by a given pair of cells.

The present invention is directed to a method and system for managing and computing statistical information based on the values taken either by a single cell, or by a pair of cells. The invention comprises means for controlling, for a given cell or a given pair of cells, the set of values upon which the statistical computing is performed.
- When invoked in a first mode called "*Reset mode*", the method re-initializes the computing of statistical information, to get rid of any past history.
- When invoked in a second mode, called *"Run* mode", the methods computes the statistical information based on the current value of the given cell or of the given pair of cells, and of the past historical values taken during the current *"Run* mode".

More particularly, the method according to the present invention, for use in a multi-dimensional spreadsheet comprising a plurality of cells identified by a cell address along each dimension, comprises the steps of:
- receiving a command for computing statistical data based on successive values of a first cell over a time period, said command comprising :
   - means for identifying said first cell;
   - means for determining the beginning and the end of the time period;
   - a reference to a statistical function for computing statistical data based on the successive values of said first cell over said time period;
- computing statistical data based on the successive values of said first cell over said time period, said step comprising the further steps of, each time the value of said first cell is updated :
- computing said statistical data by means of said statistical function, based on :
   - the current value of said first cell, and
   - the previously computed statistical data based on the successive values taken by the first cell from the beginning of the time period;
- storing the computed statistical data in place of the previously computed statistical data.

From a memory consumption and computing power consumption standpoint, the present invention is much more efficient than conventional means available in electronic spreadsheet environments.

The present invention proposes a so-called **Over Time Statistic Manager** (or **OTSM** for short) handling the management and computation of statistical information based on the values taken either by a single cell, or by a pair of cells

The foregoing, together with other objects, features, and advantages of this invention can be better appreciated with reference to the following specification, claims and drawings.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:
- Figure **1A** is a block diagram of a computer system in which the present invention can be embodied.
- Figure **1B** is a block diagram of a software system including an operating system, an application software, and a user interface for carrying out the present invention.
- Figure **1C** illustrates the basic architecture and functionality of a graphical user interface in which the present invention may be embodied.
- Figure **2A** shows a spreadsheet notebook interface used in the preferred embodiment of the present invention.
- Figure **2B** shows the toolbar component of the notebook interface shown in Figure **2A**.
- Figures **2C** and **2D** show page identifiers for rapidly accessing and manipulating individual pages of the notebook interface shown in Figure **2A**.
- Figure **3** illustrates the structure of the *"Simple Over Time Working Zone"* and of the *"Double Over Time Working* Zone" used in the preferred embodiment of the present invention.
- Figure **4** is a flow chart illustrating the method for managing over time statistics to take according to the present invention.

### Preferred embodiment of the invention

### HARDWARE

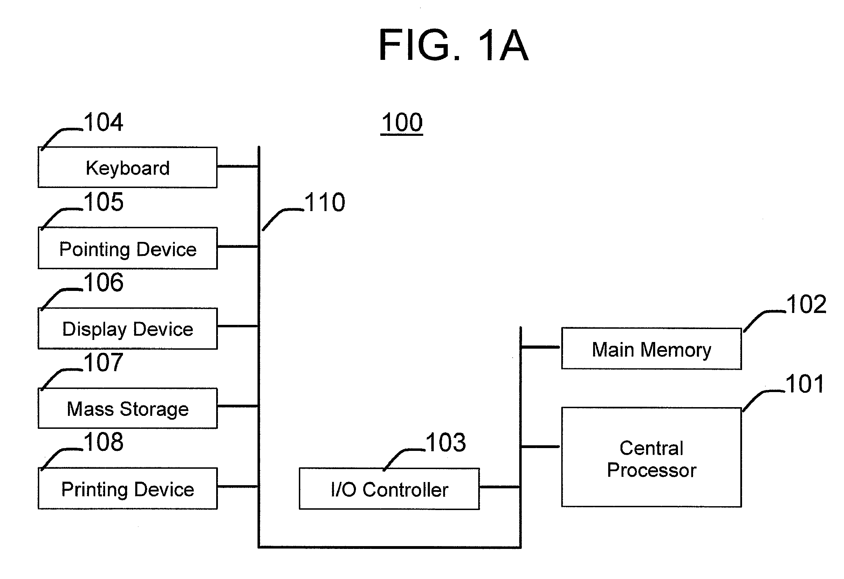

As shown in FIG. **1A,** the present invention may be embodied on a computer system **100** comprising a central processor **101,** a main memory **102,** an input/output controller **103,** a keyboard **104,** a pointing device **105** (e.g., mouse, track ball, pen device, or the like), a display device **106,** and a mass storage **107** (e.g., hard disk). Additional input/output devices, such as a printing device **108,** may be included in the system **100** as desired. As illustrated, the various components of the system **100** communicate through a system bus **110** or similar architecture. In a preferred embodiment, the computer system **100** includes an IBM-compatible personal computer, which is available from several vendors (including IBM of Armonk, N.Y.).

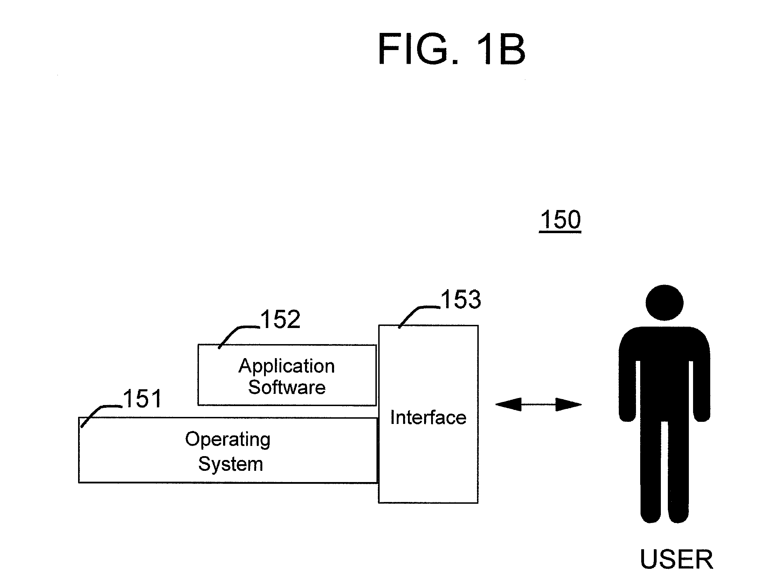

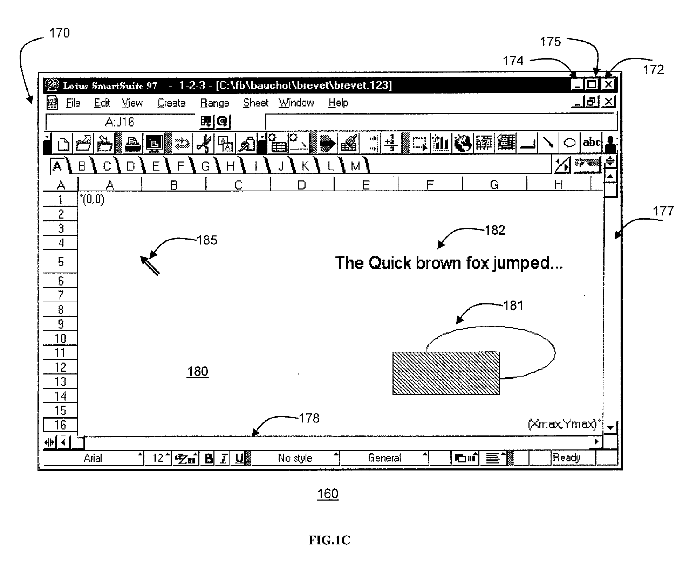

Illustrated in FIG. **1 B,** a computer software system **150** is provided for directing the operation of the computer system **100.** Software system **150,** which is stored in system memory **102** and on disk memory **107,** includes a kernel or operating system **151** and a shell or interface **153.** One or more application programs, such as application software **152,** may be "loaded' (i.e., transferred from storage **107** into memory **102)** for execution by the system **100.** The system **100** receives user commands and data through user interface **153;** these inputs may then be acted upon by the system **100** in accordance with instructions from operating module **151** and/or application module **152.** The interface **153,** which is preferably a graphical user interface (GUI), also serves to display results, whereupon the user may supply additional inputs or terminate the session. In a preferred embodiment, operating system **151** and interface **153** are Microsoft Win95, available from Microsoft Corporation of Redmond, Wash. Application module **152,** on the other hand, includes a spreadsheet notebook of the present invention as described in further detail herein below.

### INTERFACE

### Introduction

The following description will focus on the presently preferred embodiments of the present invention, which are embodied in spreadsheet applications operative in the Microsoft Windows environment. The present invention, however, is not limited to any particular application or any particular environment. Instead, those skilled in the art will find that the system and methods of the present invention may be advantageously applied to a variety of system and application software, including database management systems, word processors, and the like. Moreover, the present invention may be embodied on a variety of different platforms, including Macintosh, UNIX, NextStep, and the like. 'Therefore, the description of the exemplary embodiments which follows is for purposes of illustration and not limitation.

Referring now to FIG. **1C,** the system **100** includes a windowing interface or workspace **160.** Window **160** is a rectangular, graphical user interface (GUI) for display on screen **106;** additional windowing elements may be displayed in various sizes and formats (e.g., tiled or cascaded), as desired. At the top of window **160** is a menu bar **170** with a plurality of user-command choices, each of which may invoke additional submenus and software tools for use with application objects. Window **160** includes a client area **180** for displaying and manipulating screen objects, such as graphic object **181** and text object **182.** In essence, the client area is a workspace or view port for the user to interact with data objects which reside within the computer system **100.**

Windowing interface **160** includes a screen cursor or pointer **185** for selecting and otherwise invoking screen objects of interest. In response to user movement signals from the pointing device **105,** the cursor **185** floats (i.e., freely moves) across the screen **106** to a desired screen location. During or after cursor movement, the user may generate user-event signals (e.g., mouse button "clicks" and "drags") for selecting and manipulating objects, as is known in the art. For example, Window **160** may be closed, resized, or scrolled by "clicking" (selecting) screen components **172, 174/5,** and **177/8,** respectively.

In a preferred embodiment, screen cursor **185** is controlled with a mouse device. Single-button, double-button, or triple-button mouse devices are available from a variety of vendors, including Apple Computer of Cupertino, California., Microsoft Corporation of Redmond, Wash., and Logitech Corporation of Fremont, California., respectively. More preferably, screen cursor control device **105** is a two-button mouse device, including both right and left "mouse buttons."

Programming techniques and operations for mouse devices are well documented in the programming and hardware literature; see e.g., *Microsoft Mouse Programmer's Reference,* Microsoft Press, 1989. The general construction and operation of a GUI event-driven system, such as Windows, is also known in the art: see, e.g., Petzold, *C., Programming Windows*, Second Edition, Microsoft Press, 1990. The disclosures of each are hereby incorporated by reference.

### Preferred interface

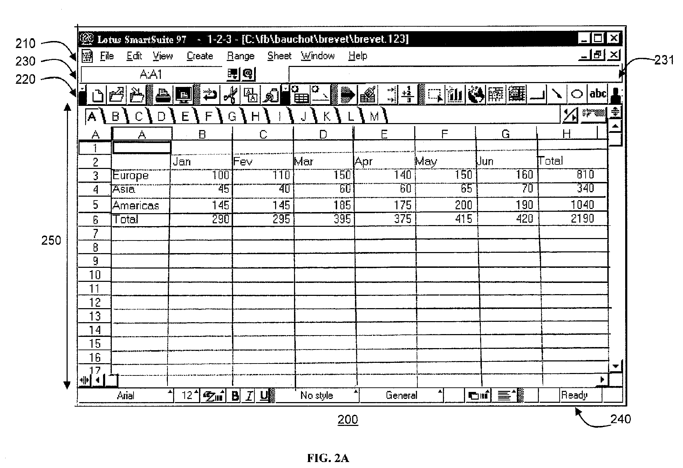

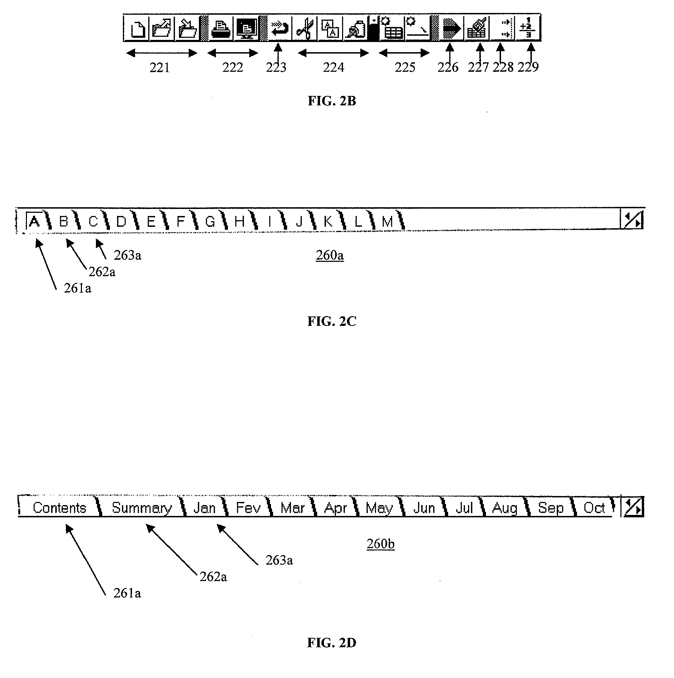

Shown in FIG. 2**A**, a spreadsheet notebook interface of the present invention will now be described The spreadsheet notebook or workbook of the present invention includes a notebook workspace **200** for receiving, processing, and presenting information, including alphanumeric as well as graphic information. Notebook workspace **200** includes a menu bar **210,** a toolbar **220,** a current cell indicator **230,** an input line **231,** a status line **240,** and a notebook window **250.** The menu bar **210** displays and invokes, in response to user inputs, a main level of user commands. Menu **210** also invokes additional pull down menus, as is known in windowing applications. Input line **231** accepts user commands and information for the entry and editing of cell contents, which may include data, formulas, macros, and the like. Indicator **230** displays an address for the current cursor (i.e., active cell) position. At the status line **240,** system **100** displays information about the current state of the workbook; for example, a "READY" indicator means that the system is ready for the user to select another task to be performed.

The toolbar **220,** shown in further detail in FIG. 2**B,** comprises a row or palette of tools which provide a quick way for the user to choose commonly-used menu commands or properties. In an exemplary embodiment, toolbar **220** includes file manipulation buttons **221,** printing buttons **222,** an undo button **223,** cut, copy, and paste buttons **224,** information pop-up window buttons tool **225,** a range selection button **226,** a style copy button **227,** a column resizing button **228,** and a sum button **229.** The functions of these buttons are suggested by their names. For instance, buttons **224** cut, copy and paste data and objects to and from Windows' clipboard. The same actions are also available as corresponding commands in the Edit menu (available from menu bar **210).**

The notebook, which provides an interface for entering and displaying information of interest, includes a plurality of spreadsheet pages. Each page may include conventional windowing features and operations, such as moving, resizing, and deleting. In a preferred embodiment, the notebook includes 256 spreadsheet pages, all of which are saved as a single disk file on the mass storage **107.** Workspace **200** may display one or more notebooks, each sized and positioned (e.g., tiled, overlapping, and the like) according to user-specified constraints.

Each spreadsheet page of a notebook includes a 2-D spread. Page A from the notebook **200,** for example, includes a grid in row and column format, such as row 3 and column F. At each row/column intersection, a box or cell (e.g., cell **C4)** is provided for entering, processing, and displaying information in a conventional manner. Each cell is addressable, with a selector being provided for indicating a currently active one (i.e., the cell that is currently selected).

As shown in FIGS. **2C-D,** individual notebook pages are identified by page identifiers **260,** preferably located along one edge of a notebook. In a preferred embodiment, each page identifier is in the form of a tab member (e.g., members **261a, 262a, 263a)** situated along a top edge of the notebook. Each tab member may include representative indicia, such as textual or graphic labels, including user selected titles representing the contents of a corresponding page. In FIG. **2C,** the tab members **260** are set to their respective default names. For example, the first three tab members (members **261 a, 262a, 263a)** are respectively set to A, B, and C. Tab members are typically given descriptive names provided by the user, however. As shown in FIG. **2D,** for example, the first three tab members have now been set to "Contents" (tab member **261b**), "Summary" (tab member **262b),** and "Jan" (tab member **263b).** In a similar manner, the remaining tabs are set to subsequent months of the year. In this manner, the user associates the page identifiers with familiar tabs from an ordinary paper notebook. Thus, the user already knows how to select a page or spread of interest: simply select the tab corresponding to the page (as one would do when selecting a page from a paper notebook).

In addition to aiding in the selection of an appropriate page of information, the user-customizable page identifiers serve aid in the entry of spreadsheet formulas. For example, when entering a formula referring to cells on another page, the user may simply use the descriptive page name in the formula itself (as described herein below), thus making it easier for the user to understand the relationship of the cell(s) or information being referenced.

A general description of the features and operation of the spreadsheet notebook interface may be found in Quattro Pro for Windows *(Getting Started, User's Guide and Building Spreadsheet Applications),* available from Borland International.

### MANAGEMENT OVER TIME STATISTICS

### Over Time Statistic Manager

In contrast to just-described conventional tools, the present invention provides a more powerful, less resource demanding approach for managing and computing statistical data based on the set of values taken by a given cell or a pair of cells. The method according to the present invention comprises the following steps :
1. Building a model of the desired process, based on formulas and functions used in selected cells or ranges of cells. Such a model is typically fed by input cells which can for instance correspond to random number generators (also available as standard built-in functions).
2. Identifying the one or plurality of cells of interest, referred to as *"Output Cells"* (or OC for short), which deserve a statistical analysis. For instance it is desired to compute, for the sequence of simulations, the standard deviation of a cell OC1, the standard deviation of a cell OC2, and the covariance between the cells OC1 and OC2.
3. Initializing selected cells with a new set of functions, so-called *"Over Time Statistical Functions"* or OTSF for short, computing the desired statistical information. Such functions are easy to master as being direct derivatives of the conventional statistical functions. If the invocation of a conventional statistical function is "@FCT(argument_list)", then the invocation of the corresponding OTS function is "@OTFCT(Reset, argument_list)", where the additional argument *"Reset"* points to a Boolean cell playing the role of a function reset. In our example,
   - a first cell will be filled with the formula "@OTSTD(Reset, OC1)",
   - a second cell will be filled with the formula "@OTSTD(Reset, OC2)", and
   - a third cell will be filled with the formula "@OTCOV(Reset, OC1, OC2)".
   The value of the cell *"Reset"* is set to FALSE., in order to prevent the re-initialization of the history (see next step).
4. Entering a loop for running a sequence of simulations according to the modeled processes. Such a loop can easily be implemented by simple macros. For each step of the loop:
   a. Feeding the model with a new set of input cells (for instance by forcing a spreadsheet recalculation if input cells contains random number generators)
   b. Checking for the end of the loop and resume the loop if its end is not reached.
   It must be noted that this loop is much simpler to write than the one of the conventional scenario, which requires to manage an array of simulation results.
5. Should the user want to run another set of simulations, then the user should first set the value of the cell named *"Reset"* equal to TRUE, and then set the value of the cell named "Reset" equal to FALSE.

With this scenario, no simulation table is created and managed. Therefore much less computing resources are required, and the associated capacity constraints are removed. Furthermore the loop of step 4 above is quite simple, typically of the form:
For I = 1 to N
Application.recalc
EndFor

The Over Time Statistic Manager is the entity managing the Over Time Statistical Functions. In a preferred embodiment of the present invention, assuming a Lotus 123 environment, the following OTSF are considered:
- @OTMAX(reset, cell1): for computing the maximum value taken over time by cell1,
- @OTMIN(reset, cell1): for computing the minimum value taken over time by cell1,
- @OTAVG(reset, cell1): for computing the average value taken over time by cell1,
- @OTSTD(reset, cell1): for computing the standard deviation of the values taken overtime by cell1,
- @OTCOV(reset, cell1, cell2): for computing the covariance between the values taken over time by cell1 and cell2,
- @OTCORREL(reset, cell1, cell2) : for computing the correlation between the values taken over time by cell1 and cell2,
where :
- *"reset"* is the name or the address of an individual cell used to reset the computation of statistical information,
- *"cell1* and *"cell2"* are the names or addresses of two individual cells whose sequence of values is the base for computing statistical information.
   Other similar OTSF could be defined without departing from the spirit of the present invention.

The OTSM takes control each time an OTSF is invoked. The OTSM handles two types of internal tables:
- a Simple Over Time Working Zone (or SOTWZ for short) and
- a Double Over Time Working Zone (or DOTWZ for short),
as described in the following section.

### Simple / Double Over Time Working Zone

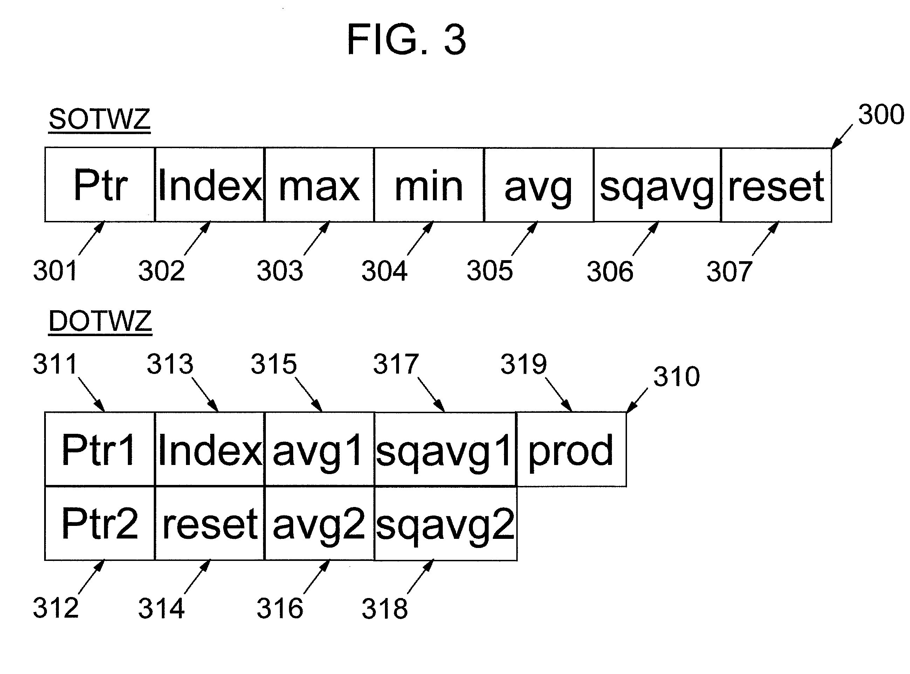

For each pair (reset, cell1) passed as argument of an OTSF is created a SOTWZ **300** the structure of which is described in FIG. **3**. An SOTWZ **300** comprises the following fields:
- a "Ptr" field **301** pointing to the address of the cell "cell1" associated to the SOTWZ **300**
- an "Index" field **302** counting the number of samples used to compute the output of the OTSF
- a "max" field **303** recording the highest value of the cell "cell1" associated to the SOTWZ **300**
- a "min" field **304** recording the lowest value of the cell "cell1" associated to the SOTWZ **300**
- an "avg" field 305 recording the average value of the cell "cell1" associated to the SOTWZ **300**
- a "sqavg" field **306** recording the average of the square value of the cell "cell1" associated to the SOTWZ **300.**
- A "reset" field **307** pointing to the cell "reset" associated to the SOTWZ **300.**

For each triple (reset, cell1, cell2) passed as argument of an OTSF is created a DOTWZ **310** the structure of which is described in FIG. **3**. An DOTWZ **310** comprises the following fields:
- a "Ptr1" field **311** pointing to the address of the cell "cell1" associated to the DOTWZ **310**
- a "Ptr2" field **312** pointing to the address of the cell "cell2" associated to the DOTWZ **310**
- an "Index" field **313** counting the number of samples used to compute the output of the OTSF
- A "reset" field **314** pointing to the cell "reset" associated to the DOTWZ **310.**
- an "avg1" field **315** recording the average value of the cell "cell1" associated to the DOTWZ **310**
- an "avg2" field **316** recording the average value of the cell "cell2" associated to the DOTWZ **310**
- a "sqavg1" field **317** recording the average of the square value of the cell "cell1" associated to the DOTWZ **310.**
- a "sqavg2" field **318** recording the average of the square value of the cell "cell2" associated to the DOTWZ **310.**
- a "prod" field **319** recording the average of the product of the values of the cells "cell1" and "cell2" associated to the DOTWZ **310.**

### OTSM Method

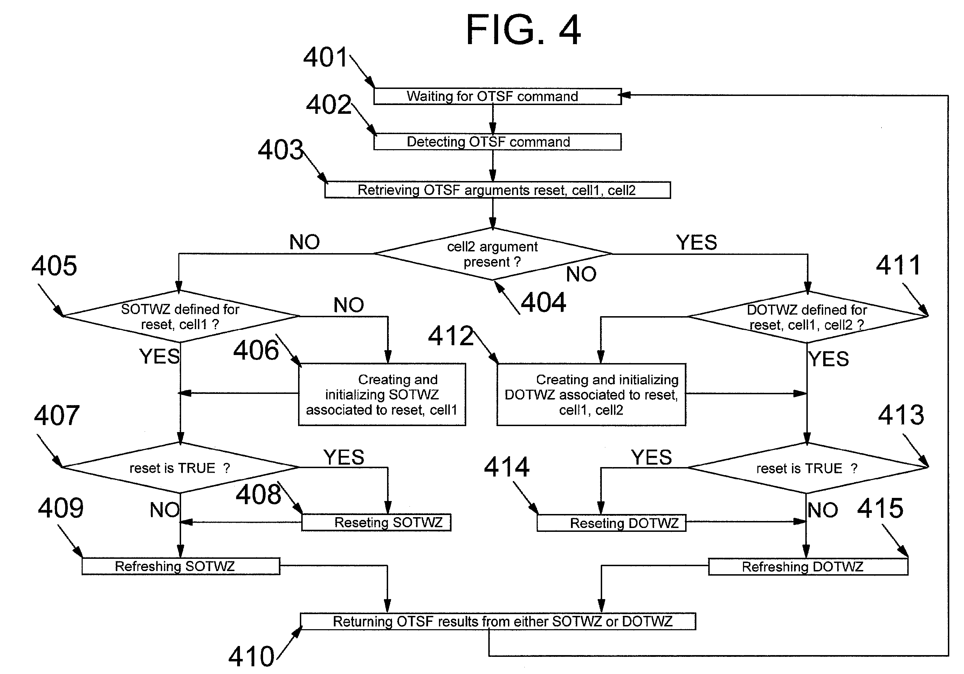

The method for managing OTDF according to the present invention is summarized in flowchart **400** of FIG **4.** This OTSM method can be seen as the processing of an OTSF.
- At step **401,** the method is in its default state, waiting for an event to initiate the process.
- At step **402,** an event is detected, as a result of an invocation of an OTSF.
- At step **403,** the arguments of the OTSF are retrieved,
   - the first argument under the name "reset",
   - the second argument under the name cell1, and
   - the third argument, if present, under the name cell2.
- At Step **404** a test is performed to check if a third argument cell2 was present. If it is the case, then control is given to step **411,** otherwise control is given to step **405.**
- At step **405** a test is performed to check if an SOTWZ **300** associated to the cell pair (reset, cell1) is already defined. If it is the case, then control is given to step **407,** otherwise control is given to step **406.**
- At step **406,** a new SOTWZ **300** is created and initialized with the following fields:
   - the "Ptr" field **301** is initialized with a pointer to the cell cell1,
   - the "Index" field **302** is initialized with a zero value,
   - the "max" field **303** is initialized with the value of the cell cell1,
   - the "min" field **304** is initialized with the value of the cell cell1,
   - the "avg" field **305** is initialized with the value of the cell cell1,
   - the "sqavg" field **306** is initialized with the square of the value of the cell cell1,
   - the "reset" field **307** is initialized with a pointer to the cell "reset".
- At step **407** a test is performed to check if reset is equal to TRUE. If it is the case, then control is given to step **408,** otherwise control is given to step **409.**
- At step **408,** the SOTWZ **300** is reset with the following actions on the fields:
   - the "Index" field **302** is initialized with a zero value,
   - the "max" field **303** is initialized with the value of the cell cell1,
   - the "min" field **304** is initialized with the value of the cell cell1,
   - the "avg" field **305** is initialized with the value of the cell cell1,
   - the "sqavg" field **306** is initialized with the square of the value of the cell cell1.
- At step **409,** the SOTWZ **300** is refreshed with the following actions on the fields:
   - the "max" field **303** is set equal to max(max,cell1),
   - the "min" field **304** is set equal to min(min, cell1),
   - the "avg" field **305** is set equal to (index*avg+cell1)/(index+1),
   - the "sqavg" field **306** is set equal to (index*sqavg+cell1*cell1)/(index+1),
   - the "Index" field **302** is set equal to index+1.
- At step **410,** the method returns the result of the OTSF function, depending on this function, as listed below:
   - @OTMAX(reset,cell1) = max;
   - @OTMIN(reset,cell1) = min;
   - @OTAVG(reset, cell1) = avg
   - @OTSTD(reset, cell1) = sqrt(sqavg - avg * avg)
   - @OTCOV(reset, cell1, cell2) = prod - avg1 * avg2
   - @OTCORREL(reset, cell1, cell2) = (prod-avg1*avg2)/sqrt(sqavg1-avg1*avg1)/sqrt(sqavg2-avg2*avg2)
      Then control is returned back to the initial step 401 for handling another OTSF command.
- At step **411** a test is performed to check if an DOTWZ **310** associated with the cell triple (reset, cell1, cell2) is already defined. If it is the case, then control is given to step 413, otherwise control is given to step 412.
- At step **412,** a new DOTWZ **310** is created and initialized with the following fields:
   - the "Ptr1" field **311** is initialized with a pointer to the cell cell1,
   - the "Ptr2" field **312** is initialized with a pointer to the cell cell2,
   - the "Index" field **313** is initialized with a zero value,
   - the "reset" field **314** is initialized with a pointer to the cell reset,
   - the "avg1" field **315** is initialized with the value of the cell cell1,
   - the "avg2" field **316** is initialized with the value of the cell cell2,
   - the "sqavg1" field **317** is initialized with the square of the value of the cell cell1,
   - the "sqavg2" field **318** is initialized with the square of the value of the cell cell2, and finally
   - the "prod" field **319** is initialized with the product of the values of the cells cell1 and cell2.
- At step **413** a test is performed to check if reset is equal to TRUE. If it is the case, then control is given to step 414, otherwise control is given to step **415.**
- At step **414,** the DOTWZ **310** is reset with the following actions on the fields:
   - the "Index" field **313** is initialized with a zero value,
   - the "avg1" field **315** is initialized with the value of the cell cell1,
   - the "avg2" field **316** is initialized with the value of the cell cell2,
   - the "sqavg1" field **317** is initialized with the square of the value of the cell cell1,
   - the "sqavg2" field **318** is initialized with the square of the value of the cell cell2, and finally
   - the "prod" field **319** is initialized with the product of the values of the cells cell1 and cell2.
- At step **415,** the DOTWZ **310** is refreshed with the following actions on the fields:
   - the "avg1" field **315** is set equal to (index*avg1+cell1)/(index+1),
   - the "avg2" field **316** is set equal to (index*avg2+cell1)/(index+1),
   - the "sqavg1" field **317** is set equal to (index*sqavg1+cell1*cell1)/(index+1),
   - the "sqavg2" field **318** is set equal to (index*sqavg2+cell2*cell2)/(index+1),
   - the "prod" field **319** is set equal to (index*prod+cell1*cell2)/(index+1), and finally
   - the "Index" field **313** is set equal to index+1.
      Then control is given to step **410.**

What has been described is merely illustrative of the application of the principles of the present invention. Other arrangements and methods can be implemented by those skilled in the art without departing from the spirit and scope of the present invention.

## Claims

1. A method in a multi-dimensional spreadsheet comprising a plurality of cells identified by a cell address along each dimension, for computing statistical data based on a set of successive values taken by a given cell over a time period, said method comprising the steps of:
• receiving a command for computing statistical data based on successive values of a first cell over a time period, said command comprising :
• means for identifying said first cell;
• means for determining the beginning and the end of the time period;
• a reference to a statistical function for computing statistical data based on the successive values of said first cell over said time period;
• computing statistical data based on the successive values of said first cell over said time period, said step comprising the further steps of, each time the value of said first cell is updated :
• computing said statistical data by means of said statistical function, based on :
• the current value of said first cell, and
• the previously computed statistical data based on the successive values taken by the first cell from the beginning of the time period;
• storing the computed statistical data in place of the previously computed statistical data.

2. The method according to the preceding claim comprising the further step of:
• copying, at the end of the time period, the computed statistical data in a predetermined output cell.

3. The method according to any one of the preceding claims wherein the step of computing statistical data based on the successive values of said first cell over said time period, comprises the preliminary step of :
• setting the value of the statistical data to zero.

4. The method according to any one of the preceding claims comprising the further steps of:
• determining the beginning of the time period;
• determining the end of the time period.

5. The method according to any one of the preceding claims wherein said statistical function computes either:
• the maximum value among the successive values taken by the first cell over the time period; or
• the minimum value among the successive values taken by the first cell over the time period; or
• the average value taken by the first cell over the time period; or
• the standard deviation of the successive values taken by the first cell over the time period.

6. The method according to any one of the preceding claims wherein said received command comprises :
• means for identifying a second cell;
and wherein said statistical function for computing statistical data is also based on the successive values of said second cell over said time period.

7. The method according to claim 6 wherein said step of computing, each time the value of said first cell is updated, statistical data by means of said statistical function, based on :
• the current value of said first cell, and
• the previously computed statistical data based on the successive values of the first cell considered from the beginning of the time period,
is replaced by the step of:
• computing, each time the value of said first cell and/or the value of said second cell are updated, statistical data by means of said statistical function, based on :
• the current value of said first cell, and
• the current value of said second cell and the previously computed statistical data based on the successive values of the first cell and second cell considered from the beginning of the time period.

8. The method according to any one of the preceding claims wherein said means for identifying said first cell or said second cell comprises a name or an address.

9. The method according to any one of claims 6 to 8 wherein said statistical function computes either:
• the maximum value among the successive values taken by the first cell or the second cell over the time period; or
• the minimum value among the successive values taken by the first or the second cell over the time period; or
• the average value taken by the first or the second cell over the time period; or
• the standard deviation of the successive values taken by the first or the second cell over the time period; or
• the covariance between the values taken over the time period by the first cell and the second cell; or
• the correlation between the values taken over the time period by the first cell and the second cell.

10. The method according to any one of the preceding claims wherein the value of said first cell is the result of a model based on one or a plurality of formulas and/or functions and supplied by a plurality of input cells.

11. The method according to any one of claims 6 to 9 wherein the value of said second cell is the result of a model based on one or a plurality of formulas and/or functions and supplied by a plurality of input cells.

12. The method according to any one of claims 10 to 11 wherein said input cells are fed by random number generators.

13. The method according to any one of claims 10 to 11 wherein said input cells are fed by external sources.

14. A system comprising means adapted for carrying out the steps of the method according to any one of the preceding claims.

15. A computer program comprising instructions for carrying out the steps of the method according to any one of claims 1 to 13 when said computer program is executed on a computer system.
